# EUROPEAN PATENT APPLICATION

(11) **EP 3 040 151 A1**
(43) Date of publication of application: **06.07.2016**
(21) Application number: 14839335.8
(22) Date of filing: 26.02.2014
(51) Int. Cl.: B23K 26/06

(54) **LASER MACHINING DEVICE**

(30) Priority: 28.08.2013 JP 2013177396
(71) Applicant: Mitsubishi Heavy Industries, Ltd., Tokyo 108-8215 (JP)
(72) Inventor: NARITA, Ryuichi, Tokyo 108-8215 (JP); GOYA, Saneyuki, Tokyo 108-8215 (JP); MUTA, Kenji, Tokyo 108-8215 (JP); WATANABE, Toshiya, Tokyo 108-8215 (JP); WATANABE, Masao, Tokyo 108-8215 (JP)
(74) Representative: Studio Torta S.p.A.
(86) International application number: PCT/JP2014/054736
(87) International publication number: WO 2015/029467

(57) **Abstract**

In order to make focal positions of laser beams having different wavelength bands coincide with one another, a laser output device that oscillates laser beams having plural wavelength bands, a spectrometer (16B) that respectively disperses the laser beams of the respective wavelength bands, and condensers (16C and 16C) that respectively condense the laser beams dispersed by the spectrometer (16B) independently and match focal points thereof to the same position, are included.

## Description

### Field

The present invention relates to a laser processing apparatus for processing a workpiece by irradiating the workpiece with laser.

### Background

Attempts have been made in recent years to use high output semiconductor lasers as laser processing apparatuses. However, because semiconductor laser beams include laser beams of plural wavelength bands, focal distances of the respective wavelengths become different from one another when the semiconductor laser beams are condensed.

Conventionally, superposing laser beams of different wavelength bands, though not semiconductor laser beams, to condense the laser beams onto the same optical axis has been disclosed, for example, in Patent Literature 1 and Patent Literature 2.

### Citation List

### Patent Literature

Patent Literature 1: Japanese Patent Application Laid-open No. 2001-196665
Patent Literature 2: Japanese Patent Application Laid-open No. 2006-263771

### Summary

### Technical Problem

A laser processing apparatus described in the above cited Patent Literature 1 is supposed to be able to irradiate the same part of a workpiece with output beams of two lasers, but focal distances of laser beams having different wavelength bands are difficult to be made the same by a condenser lens, and even if crown glass and flint glass are used, for example, focal distances of laser beams having different wavelength bands are difficult to be made the same. Therefore, like a laser processing apparatus described in Patent Literature 2, focal positions of superposed laser beams having different wavelength bands may be deliberately made different from one another with respect to a thickness direction of a workpiece, to obtain effects of the respective wavelength bands. However, in order to improve processing accuracy, power density is desirably increased by condensing laser beams to a smaller spot.

The present invention solves the above described problems, and an object thereof is to provide a laser processing apparatus that enables focal positions of laser beams having different wavelength bands to coincide with one another.

### Solution to Problem

In order to achieve the object above, according to an embodiment of the present invention, there is provided a laser processing apparatus, comprising: a laser output device that oscillates laser beams having plural wavelength bands; a spectrometer that respectively disperses the laser beams of the respective wavelength bands; and a condenser that condenses each of the laser beams dispersed by the spectrometer independently and matches focal points of the laser beams to the same position.

In this laser processing apparatus, since each of the laser beams dispersed by the spectrometer is independently condensed by the condenser to match their focal points to the same position, focal positions of the laser beams having different wavelength bands are able to be made to coincide with one another. As a result, by the laser beams having different wavelength bands being condensed to a smaller spot and power density being increased, processing accuracy is able to be improved.

According to another embodiment of the present invention, the spectrometer is formed of a prism, and the condenser is formed of a group of lenses.

In this laser processing apparatus, by application of the dispersion by the prism and the condensing by the group of lenses, laser energy loss between the incidence from the laser output device and the irradiation of the workpiece with the laser is able to be suppressed.

According to another embodiment of the present invention, the spectrometer is formed as a collection of prisms that respectively disperse the laser beams of the respective wavelength bands and make the laser beams into plural annular light beams having different diameters centering around the same optical axis, and the condenser is formed as a collection of lenses that condense the respective annular light beams with the same optical axis at the center.

In this laser processing apparatus, by dispersing the laser beams of the respective wavelength bands into the plural annular light beams centering around the same optical axis and condensing these annular light beams with the same optical axis at the center, the apparatus is able to be downsized.

According to another embodiment of the present invention, the laser processing apparatus comprises an irradiation head that has the spectrometer and the condenser, and emits the laser beams of the respective wavelength bands; a moving mechanism that relatively moves a supporting table that supports the workpiece and the irradiation head; and a control device that adjusts the relative movement between the supporting table and the irradiation head by the moving mechanism, and various conditions of the laser beams output from the laser output device.

In this laser processing apparatus, by adjusting the relative movement between the supporting table and the irradiation head by the moving mechanism and the various conditions of the laser output from the laser output device, focal positions of the leaser beams having different wavelength bands are made to coincide with one another, the laser beams having different wavelength bands are condensed to a smaller spot to increase power density, and processing of the workpiece with laser is able to be conducted while improvement in the processing accuracy is achieved. Advantageous Effects of Invention

According to the present invention, focal positions of laser beams having different wavelength bands are able to be made to coincide with one another.

### Brief Description of Drawings

FIG. 1 is a schematic configuration diagram schematically illustrating a laser processing apparatus according to an embodiment of the present invention.
FIG. 2 is a schematic configuration diagram schematically illustrating an irradiation head of a laser processing apparatus according to a first embodiment of the present invention.
FIG. 3 is a schematic configuration diagram schematically illustrating an irradiation head of a laser processing apparatus according to a second embodiment of the present invention.

### Description of Embodiments

Hereinafter, an embodiment of a laser processing apparatus according to the present invention will be described in detail, based on the drawings. This invention is not limited by this embodiment. For example, in this embodiment, a case, where a plate shaped workpiece is processed, will be described, but the shape of the workpiece is not particularly limited. The shape of the workpiece may be any of various shapes. Further, in this embodiment, a case where a hole is formed in a workpiece, a case where a workpiece is cut along a straight line, or a case where a workpiece is welded, will be described; but by adjusting a position to be processed on the workpiece, that is, a position to be irradiated with laser, a shape other than a hole or a straight line, for example, a shape having a bending point or a curved shape, may be applied. Furthermore, in this embodiment, a laser and a workpiece are relatively moved by the workpiece being moved, but the laser may be moved, or both the laser and the workpiece may be moved.

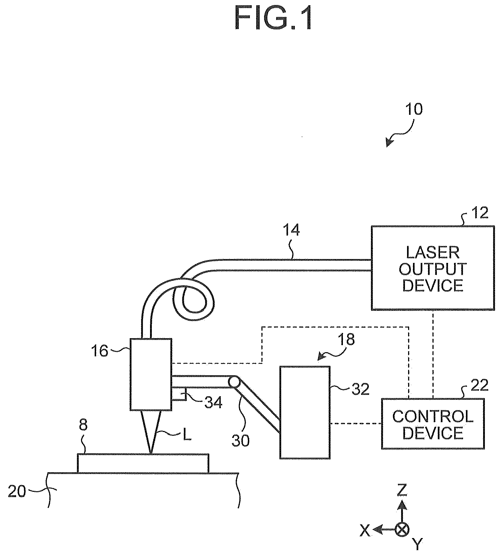

FIG. 1 is a schematic configuration diagram schematically illustrating the laser processing apparatus according to this embodiment. A laser processing apparatus 10 has, as illustrated in FIG. 1, a laser output device 12, a guiding optical system 14, an irradiation head 16, a moving mechanism 18, a supporting table 20, and a control device 22. By irradiating a workpiece 8 arranged on the supporting table 20 with laser L, the laser processing apparatus 10 processes the workpiece 8. In this embodiment, with respect to the laser processing apparatus 10, a surface of the workpiece 8 will be referred to as "XY plane", and a direction orthogonal to the surface of the workpiece 8 will be referred to as "Z direction".

The workpiece 8 of this embodiment is a plate shaped member. As the workpiece 8, a member made of any of various materials, such as, for example: Inconel; Hastelloy; stainless steel; ceramic; steel; carbon steel; ceramics; silicon; titanium; tungsten; resin; plastics; and glass, may be used. Moreover, as the workpiece 8, a member made of any of: fiber reinforced plastics, such as carbon fiber reinforced plastics (CFRP), glass fiber reinforced plastics (GFRP), and glass mat thermoplastics (GMT); various metals, such as ferroalloys other than steel plates or aluminum alloys; other composite materials; and the like may also be used. In addition, if welding is performed, a mechanism for supplying a filler material, powder, and the like may be included.

The laser output device 12 is a device that outputs laser. The laser output device 12 oscillates laser beams having plural wavelength bands. This laser output device 12 is, for example, a semiconductor laser oscillator.

The guiding optical system 14 is an optical system that guides the laser output from the laser output device 12 to the irradiation head 16. The guiding optical system 14 of this embodiment is an optical fiber. One end portion of the guiding optical system 14 is connected to a laser output port of the laser output device 12 and the other end portion thereof is connected to the irradiation head 16. The guiding optical system 14 outputs the laser output from the laser output device 12 towards an input port of the irradiation head 16. The configuration of the guiding optical system 14 is not limited to this example. The laser processing apparatus 10 may guide the laser to the irradiation head 16 through reflection, condensing, and the like of the laser by use of a combination of any of mirrors and lenses serving as the guiding optical system 14. Or, the laser may be directly guided from the laser output device 12 to the irradiation head 16.

The irradiation head 16 irradiates the workpiece 8 with the laser L output from the guiding optical system 14. Details of the irradiation head 16 will be described later.

The moving mechanism 18 has an arm 30, and a driving source 32 that moves the arm 30. A distal end of the arm 30 supports the irradiation head 16. The driving source 32 is able to move the arm 30 in three XYZ axial directions. By the moving mechanism 18, it is able to irradiate various positions on the workpiece 8 with the laser L from the irradiation head 16, by causing the arm 30 to be moved in the XYZ directions by the driving source 32. Further, the moving mechanism 18 has a position detector 34 that detects positions of the irradiation head 16 in the XYZ directions. In this embodiment, the moving mechanism 18 is a mechanism that causes the irradiation head 16 to be moved by the arm 30 and the driving source 32, but a mechanism that causes the irradiation head 16 to be moved by an XY stage, an XYZ stage, or the like may also be used.

The supporting table 20 supports the workpiece 8 at a predetermined position. In the laser processing apparatus 10, the supporting table 20 may be formed as the XY stage that moves the workpiece 8 in the XY directions.

The control device 22 controls operation of each unit. The control device 22 adjusts various conditions of the laser output from the laser output device 12, and adjusts a position of the irradiation head 16 relative to the workpiece 8 by causing the irradiation head 16 to be moved by the moving mechanism 18.

This laser processing apparatus 10 causes laser to be output from the laser output device 12. In the laser processing apparatus 10, the guiding optical system 14 guides the output laser L to the irradiation head 16. In the laser processing apparatus 10, the moving mechanism 18 moves the irradiation head 16, while the position detector 34 detects the positions of the irradiation head 16 in the XYZ directions. Thereby, the laser processing apparatus 10 is able to process the workpiece 8.

### [First Embodiment]

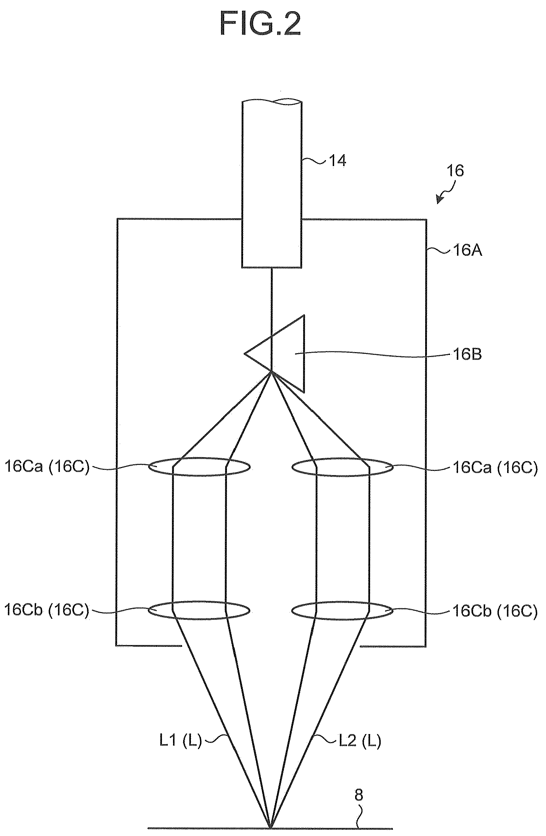

FIG. 2 is a schematic configuration diagram schematically illustrating an irradiation head of a laser processing apparatus according to this embodiment. As illustrated in FIG. 2, the irradiation head 16 has, inside a casing 16A supported by the above described moving mechanism 18, a spectrometer 16B and condensers 16C, provided therein. The spectrometer 16B respectively disperses the laser beams of the respective wavelength bands incident from the guiding optical system 14. In FIG. 2, a mode, in which laser beams of two wavelength bands are respectively dispersed, is illustrated. The condensers 16C respectively condense the laser beams dispersed by the spectrometer 16B independently and match focal points thereof to the same position.

The spectrometer 16B is formed of a prism, and by the laser beams incident on the spectrometer 16B from the guiding optical system 14 passing therethrough, the laser beams of the respective wavelength bands are dispersed into different directions due to a difference in refractive index.

The condensers 16C are respectively provided correspondingly to the laser beams of the respective wavelength bands dispersed by the spectrometer 16B. Each of the condensers 16C is formed as a group of lenses having: a parallel optical system 16Ca that makes the laser incident from the spectrometer 16B into parallel light; and a condensing optical system 16Cb that condenses the laser made into the parallel light by the parallel optical system 16Ca. The parallel optical system 16Ca and the condensing optical system 16Cb in FIG. 2 are schematically illustrated, and their lens configuration is not limited.

In this irradiation head 16, the workpiece 8 is irradiated with the laser L that has been condensed. In this embodiment, the laser output device 12 oscillates laser beams having plural (two in FIG. 2) wavelength bands. After being respectively dispersed by the spectrometer 16B into the respective wavelength bands, these laser beams are made into parallel light beams by the parallel optical systems 16Ca in the condensers 16C respectively, and laser beams L1 and L2 of the respective wavelength bands are independently emitted with their focal points matched to the same position (a position (surface) to be processed on the workpiece 8).

As described above, the laser processing apparatus 10 of this embodiment includes: the laser output device 12 that oscillates laser beams having plural wavelength bands; the spectrometer 16B that respectively disperses the laser beams of the respective wavelength bands; and the condensers 16C and 16C that respectively condense the laser beams dispersed by the spectrometer 16B independently and match their focal points to the same position.

By this laser processing apparatus 10, since the laser beams dispersed by the spectrometer 16B are respectively condensed by the condensers 16C and 16C independently and their focal points are matched to the same position, focal positions of the laser beams L1 and L2 having different wavelength bands are able to be made to coincide with each other. As a result, by the laser beams L1 and L2 having different wavelength bands being condensed to a smaller spot and power density being increased, processing accuracy is able to be improved.

Moreover, preferably, in this laser processing apparatus 10 of this embodiment, the spectrometer 16B is formed of the prism and the condenser 16C is formed of the group of lenses.

In this laser processing apparatus 10, by application of the dispersion by the prism and the condensing by the group of lenses, laser energy loss between the incidence from the laser output device 12 and the irradiation of the workpiece 8 with the laser L is able to be suppressed.

### [Second Embodiment]

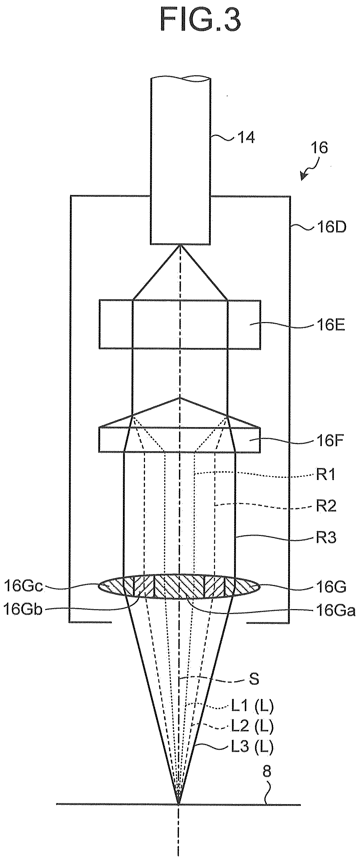

FIG. 3 is a schematic configuration diagram schematically illustrating an irradiation head of a laser processing apparatus according to this embodiment. As illustrated in FIG. 3, the irradiation head 16 has, inside a casing 16D supported by the above described moving mechanism 18, a collimator 16E, a spectrometer 16F, and a condenser 16G provided therein. The collimator 16E makes laser beams incident from the guiding optical system 14 into parallel light beams. The spectrometer 16F respectively disperses the laser beams of the respective wavelength bands incident from the collimator 16E. In FIG. 3, a mode, in which laser beams of three wavelength bands are respectively dispersed, is illustrated. The condenser 16G condenses each of the laser beams dispersed by the spectrometer 16F independently and matches focal points thereof to the same position.

The spectrometer 16F is a collection of prisms continuously arranged and formed in a disk shape, and is called a cone lens. By the laser beams incident from the collimator 16E passing therethrough, this spectrometer 16F respectively disperses the laser beams of the respective wavelength bands according to differences in refractive index, and makes the laser beams into plural annular light beams R1, R2, and R3 having different diameters and centering around the same optical axis S.

The condenser 16G is formed as a collection of plural (three, in this embodiment) lenses 16Ga, 16Gb, and 16Gc continuously arranged outward from the center and formed in a disk shape, so as to condense each of the annular light beams R1, R2, and R3, with the same optical axis S being at the center.

In this irradiation head 16, the workpiece 8 is irradiated with the laser L that has been condensed. In this embodiment, the laser output device 12 oscillates laser beams having plural (three, in FIG. 3) wavelength bands. After being respectively dispersed into the respective wavelength bands and made into the annular light beams R1, R2, and R3 by the spectrometer 16F, these laser beams are respectively condensed by the condenser 16G, and the laser beams L1, L2, and L3 of the respective wavelength bands are emitted with their focal points independently matched to the same position (a position (surface) to be processed on the workpiece 8).

As described above, the laser processing apparatus 10 of this embodiment includes: the laser output device 12 that oscillates laser beams having plural wavelength bands; the spectrometer 16F that respectively disperses the laser beams of the respective wavelength bands; and the condenser 16G that condenses each of the laser beams dispersed by the spectrometer 16F independently and matches their focal points to the same position.

By this laser processing apparatus 10, since the laser beams dispersed by the spectrometer 16F are respectively condensed by the lenses 16Ga, 16Gb, and 16Gc of the condenser 16G independently and their focal points are matched to the same position, focal positions of the laser beams L1, L2, and L3 having different wavelength bands are able to be made to coincide with one another. As a result, by the laser beams L1, L2, and L3 having different wavelength bands being condensed to a smaller spot and power density being increased, processing accuracy is able to be improved.

In addition, preferably, in the laser processing apparatus 10 of this embodiment, the spectrometer 16F is formed as the collection of prisms that respectively disperse the laser beams of the respective wavelength bands and make the laser beams into the plural annular light beams R1, R2, and R3 having different diameters centering around the same optical axis S, and the condenser 16G is formed as the collection of the lenses 16Ga, 16Gb, and 16Gc that condense the respective annular light beams R1, R2, and R3, with the same optical axis S at the center.

By this laser processing apparatus 10, since the laser beams of the respective wavelength bands are dispersed into the plural annular light beams R1, R2, and R3 centering around the same optical axis S and these annular light beams R1, R2, and R3 are condensed with the same optical axis S at the center, focal positions of the laser beams L1, L2, and L3 having different wavelength bands are able to be made to coincide with one another. As a result, by the laser beams L1, L2, and L3 having different wavelength bands being condensed to a smaller spot and power density being increased, processing accuracy is able to be improved. In particular, in this laser processing apparatus 10, by dispersing the laser beams of the respective wavelength bands into the plural annular light beams R1, R2, and R3 centering around the same optical axis S and condensing these annular light beams R1, R2, and R3 with the same optical axis S at the center, the apparatus is able to be downsized as compared with the above described first embodiment.

### Reference Signs List

- 8: WORKPIECE
- 10: LASER PROCESSING APPARATUS
- 12: LASER OUTPUT DEVICE
- 16: IRRADIATION HEAD
- 16A: CASING
- 16B: SPECTROMETER
- 16C: CONDENSER
- 16D: CASING
- 16E: COLLIMATOR
- 16F: SPECTROMETER
- 16G: CONDENSER
- 16Ga, 16Gb, 16Gc: LENS
- S: OPTICAL AXIS

## Claims

1. A laser processing apparatus (10), comprising:
a laser output device (12) that oscillates laser beams (L) having plural wavelength bands;
a spectrometer (16B) that respectively disperses the laser beams (L) of the respective wavelength bands; and
a condenser (16C) that condenses each of the laser beams dispersed by the spectrometer (16B) independently and matches focal points of the laser beams (L) to the same position.

2. The laser processing apparatus (10) according to claim 1, wherein the spectrometer (16B) is formed of a prism, and the condenser (16C) is formed of a group of lenses (16Ca, 16Cb).

3. The laser processing apparatus (10) according to claim 1, wherein
the spectrometer (16B) is formed as a collection of prisms that respectively disperse the laser beams (L) of the respective wavelength bands and make the laser beams (L) into plural annular light beams (R1, R2, R3) having different diameters centering around the same optical axis (S), and
the condenser (16G) is formed as a collection of lenses (16Ga, 16Gb, 16Gc) that condense the respective annular light beams (R1, R2, R3) with the same optical axis (S) at the center.

4. The laser processing apparatus (10) according to any one of claims 1 to 3, comprising:
an irradiation head (16) that has the spectrometer (16B) and the condenser (16C), and emits the laser beams (L) of the respective wavelength bands;
a moving mechanism (18) that relatively moves a supporting table (20) that supports the workpiece (8) and the irradiation head (16); and
a control device (22) that adjusts the relative movement between the supporting table (20) and the irradiation head (16) by the moving mechanism (18), and various conditions of the laser beams (L) output from the laser output device (12).
